# EUROPEAN PATENT APPLICATION

(11) **EP 1 469 185 A1**
(43) Date of publication of application: **20.10.2004**
(21) Application number: 04009155.5
(22) Date of filing: 16.04.2004
(51) Int. Cl.: F02M 25/00

(54) **Emissions reducing method**

(30) Priority: 16.04.2003 US 417465
(71) Applicant: ETHYL CORPORATION, Richmond, Virginia 23219-4304 (US)
(72) Inventor: Schwab, Scott, B., Richmond, VA 23233 (US); Pettigrew, Alexander F., Chesterfield, VA 23838 (US); Yondola, Robert, A., Glen Allen, VA 23059 (US); Davidson, Robert, I., Midlothian, VA 23113 (US)
(74) Representative: Schüssler, Andrea, Dr.

(57) **Abstract**

An emission credit process (30) that facilitates the provision of emissions credits to parties that make significant contributions to effecting a particular desired emissions reduction goal or goals as pertains to a reduction of emissions that correspond to consumption of a given consumable product (12) by one or more end-user mobile platforms (13).

## Description

### Technical Field

This invention relates generally to emissions credits.

### Background

Many activities and processes, both naturally occurring and as pertain to human activities, are known to entail the coincident co-production of by-products. Unfortunately, in many instances, such by-products include one or more components that are known or perceived to be at least undesirable and/or wasteful and, sometimes worse, to constitute a potential risk to the environment in general and/or to particular sensitive targets (including both biological and non-biological targets). For example, combustion of diesel fuel often results in the environmental release of corresponding nitrogen oxides (so-called "NOₓ," an expression that includes, for example, NO, NO₂, and NO₃), combustion of gasoline often results in the environmental release of corresponding sulfur oxide (so-called "SOₓ," an expression that includes, for example, SO, SO₂, and SO₃), and the combustion of most if not all petroleum-based consumables often results in the environmental release of corresponding particulate substances.

Various solutions have been proposed to encourage the reduction or elimination of the release of such by-products, including particularly the emission of numerous specifically identified substances such as those noted above. One proposed approach would permit one relatively compliant producer of such by-products to effectively trade the benefit of their efficiencies to another less-efficient producer of by-products. For example, a coal-burning power generation facility that installs especially efficient equipment might succeed in reducing their regulated and/or monitored by-product emissions to a level below, for example, some regulated or voluntarily established efficiency target. By permitting this efficient producer to transfer some recognition of this efficiency, in the form of an emissions credit, to another less efficient power generation facility, the latter can avoid making an immediate costly upgrade of their facilities while at the same time permitting the former to receive an immediate return of sorts on their investment in efficiency. Simultaneous with these events, the overall emission of the by-product(s) of concern will be reduced. Furthermore, an economic incentive now exists to urge yet others to make the investments required to reduce their own emissions, either to avoid the need to pay others for such offsetting credits or to themselves obtain the benefit of such returns.

Unfortunately, such an approach has apparent value and benefit only for large, fixed infrastructure producers of undesired by-products, such as power generation facilities and large industrial processing and/or manufacturing facilities. Such incentives are inapplicable to small producers of by-products (such as individual automobile owners and operators) notwithstanding the inarguably large contribution of undesired by-products that such individual producers make in the aggregate.

By "emission credit" we mean allowance (term of art), permits, credits, and the like which are or have been allowed, authorized, or recognized by some relevant sovereign entity (such as but not limited to a city (including municipalities of all sizes and types including both incorporated and unincorporated municipalities), a county, a state or province, or a nation, as well as related governmental entities such regional, multi-national, or other international bodies such as the United Nations or the European Union).

### Brief Description of the Drawings

The above needs are at least partially met through provision of the emissions credit method described in the following detailed description, particularly when studied in conjunction with the drawings, wherein:
FIG. 1 comprises a block diagram as configured in accordance with the prior art;
FIG. 2 comprises a block diagram as configured in accordance with various embodiments of the invention; and
FIG. 3 comprises a flow diagram as configured in accordance with various embodiments of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are typically not depicted in order to facilitate a less obstructed view of these various embodiments of the present invention.

### Detailed Description

Generally speaking, pursuant to these various embodiments, one identifies a first party that provides a consumable product that is distributed for consumption in an end-user mobile platform wherein the consumption of the consumable product includes a corresponding resultant emission of at least a first substance of interest. In a preferred embodiment, this first substance of interest comprises a substance that is generally recognized as being non-beneficial when released as a by-product. One then provides to the first party a material that, when combined with the consumable product, will reduce the corresponding resultant emission of the first substance of interest. To encourage and stimulate such behavior, one then receives an emission credit that corresponds, at least in part, to the reduction of the corresponding resultant emission. Depending upon the embodiment, various parties can receive this emission credit in the first instance (either alone or as shared with others) or pursuant to a secondary transfer as appropriate to a particular context and application.

So configured, for example, a first party that develops a particularly effective fuel additive that reduces emissions of SOₓ and/or NOₓ can provide this fuel additive to a second party such as an enterprise that offers fuel to a significant portion of the motoring public. This first party can then receive the benefit of emissions credits that correspond to the SOₓ and/or NOₓ emissions reductions achieved over the number of gallons of fuel sold (or as measured with respect to such other metric as may be appropriate and desired). Such credits can be used by the party to offset their own potential needs or can be transferred to other parties in exchange for something else of value. An emissions credit process so configured can be seen to likely encourage the development and widespread use of emissions-reduction agents and processes of various kinds for mobile platforms of various kinds and sizes. In fact, contrary to prior solutions, these particular embodiments hold the potential of offering increasing value and return even when applied in a context of increasingly unorganized and otherwise relatively unaccountable end-user consumers (such as hundreds of millions of private vehicle owners and operators).

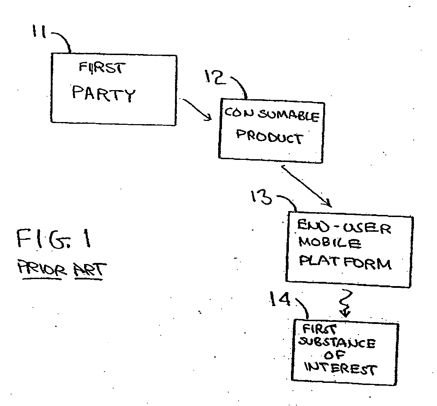

Referring now to the drawings, and in particular to FIG. 1, it will aid in understanding these present embodiments if one first clearly understands a relevant prior art paradigm. A first party **11** offers a consumable product **12** for use in end-user mobile platforms **13**. For example, a petroleum distiller offers gasoline or diesel fuel for consumption by end-user consumers in their respective vehicles. Such vehicles can include, but are not limited to, terrestrial vehicles such as automobiles, trucks, on-road and off-road transportation and recreation vehicles, and trains, aerial vehicles such as airplanes and helicopters, and marine vehicles such as boats. In addition, a given end-user consumer may own and/or operate a single such vehicle or may be responsible for a fleet of such vehicles. It is also possible that some appropriate intermediary sponsor stands in to represent the end-user mobile platform(s). For example, a fueling station enterprise (such as an enterprise that owns and operates a plurality of gasoline service stations) that provides the consumable product **12** to the ultimate end-user may be a suitable representative of the end-user mobile platform **13** for these purposes. As another alternative, the sponsor could comprise a governmental entity (such as a department of transportation or a department of motor vehicles as typically exists at a state level of government) or other regulatory body or entity.

The consumable product **12**, when consumed in ordinary course of usage by the end-user mobile platform exudes an undesired by-product comprising at least a first substance of interest **14**. This substance may be a legally regulated substance of interest and/or a voluntarily regulated substance of interest. For example, if the consumable product 12 comprises gasoline, the first substance of interest **14** can be a sulfur oxide. If the consumable product **12** comprises diesel fuel, the first substance of interest **14** can be a nitrogen oxide. And generally speaking, if the consumable product **12** comprises a petroleum-based product, the first substance of interest **13** can include but is not limited to one or more of a variety of particulate substances, hydrocarbons, volatile organic compounds, carbon monoxide, and carbon dioxide as well understood in the art.

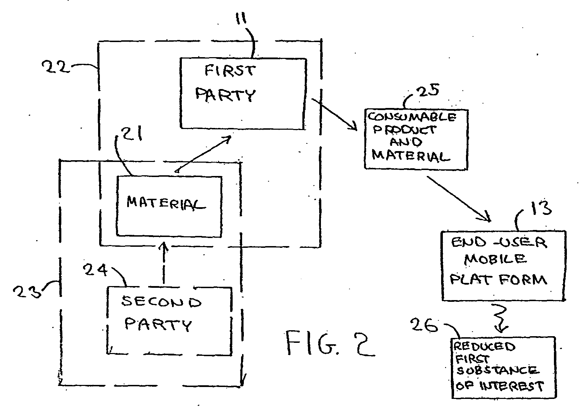

Referring now to FIG. 2, in this embodiment, the first party **11** adds at least a first material **21** to the consumable product to yield a combined consumable product and material **25**. For example, when the consumable product comprises a petroleum-based product, the additive material **21** can comprise a petroleum additive. This material **21**, when combined with the consumable product, reduces the resultant emission of the first substance of interest **14**. That is, when the end-user mobile platform **13** consumes the combined consumable product and material **25** during its operations, the resultant corresponding emissions of the first substance of interest are reduced **26** as compared to when the consumable product **12** is consumed without the additive material **21**. To illustrate, when the consumable product comprises a diesel fuel, the material **21** could comprise a diesel ignition improver (such as, for example, a cetane improver such as 2-ethyl hexyl nitrate). To illustrate further, when the consumable product comprises gasoline, the material **21** could comprise an additive such as an organic manganese compound fuel additive (including but limited to a material such as methylcyclopentadienyl manganese tricarbonyl).

In a preferred embodiment, the emissions of interest are reduced by at least a predetermined value. The actual reduction can be ascertained and/or expressed in a variety of ways as desired and/or as appropriate to a given application and setting. For example, it may be appropriate and possible to measure the specific performance of each end-user mobile platform. In the alternative, general, average, and/or representative values that correspond to ordinary performance of the end-user mobile platform(s) can be used. As yet another alternative illustration, in some instances it may be possible to reliably measure levels of the before and after ambient presence of the first substance of interest and credit the additive material **21** for at least some portion of the measured improvement.

Pursuant to one arrangement **22**, the first party **11** manufactures and provides the additive material **21** for itself. Pursuant to another arrangement **23**, a second party **24** manufactures and/or otherwise provides the additive material **21** to the first party **11**.

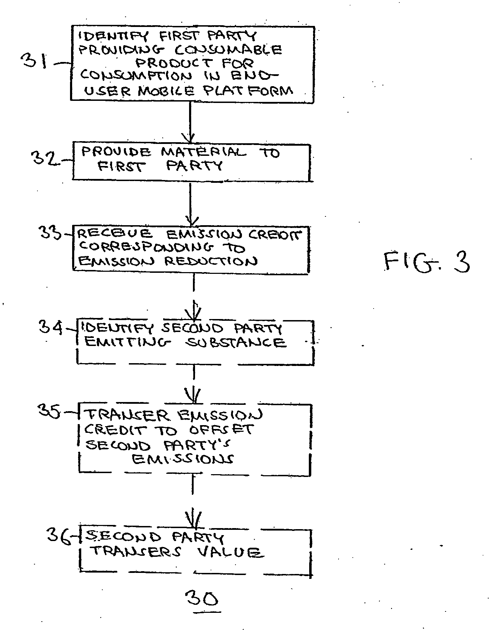

Referring now to FIG. 3, various embodiments of a process **30** that integrates an emissions credit mechanism into the above described paradigm to thereby aid in stimulating, encouraging, and rewarding such behaviors will be described. The process **30** begins by identifying **31** a first party that provides a consumable product that is distributed for consumption in an end-user mobile platform. The process **30** then sees to the provision **32** of a material to this first party that, when combined with the consumable product, will reduce the corresponding resultant emission of the first substance of interest. As noted above, this material can be self-provided by the first party or can be provided by one or more other parties. This process encompasses both the provision of such a material as part of an ordinary business transaction (where, for example, the first party obtains the material in exchange for a commensurate payment) and when the material is provided in exchange for something else of value, including but not limited to a provision of an emission credit as received by the first party for use of the material to the party that provides the material to the first party.

The process **30** then provides for at least one party to receive **33** an emission credit that corresponds, at least in part, to the reduction of the corresponding resultant emission as may be due to the material. This emission credit may comprise a legally regulated emission credit (as may occur when the first substance of interest comprises a legally regulated substance of interest and a corresponding emissions credit has been legally mandated by some relevant sovereign entity (such as but not limited to a city (including municipalities of all sizes and types including both incorporated and unincorporated municipalities), a county, a state or province, or a nation, as well as related governmental entities such regional, multi-national, or other international bodies such as the United Nations or the European Union). The emission credit may also comprise a voluntarily administered emissions credit (as may occur when the first substance of interest comprises a voluntarily regulated substance of interest).

Such emissions credits can be relatively virtual, as where a record of issued credits and their history of usage, depletion, and transfer is centrally maintained in, for example, a database. Or, if desired, such emissions credits can be represented in some fashion by negotiable documentation (such as a printed credit award that is literally held until provided to a corresponding authority as "payment" due for engendering accountable emissions). In any event, it should be expressly understood that the expression "emissions credit" as used herein is intended to include all related concepts, including but not limited to offsets, emissions reduction credits (ERC's), and "allowances" as are often used in so-called cap-and-trade programs, and further to include credits that are usable upon receipt, credits bearing a first-allowed-year-for-usage restriction, credits bearing a use-it-or-lose-it term limitation, bankable credits that do not expire prior to use, and so forth.

Depending upon the needs and context of a given application, the emission credit may be received **33** directly or indirectly from a regulatory agency or an administrative entity as appropriate (for example, the United States or an individual state's Environmental Protection Agency's allowance tracking system for their acid rain division tracks initial allotments of allowances to specific parties and further provides the mechanism whereby a trade of such allowances as between two parties can further be memorialized). For example, the party that sources the additive material may receive the emissions credit substantially directly from an administrative entity or regulatory body that administers voluntary or mandatory compliance with an emissions reduction credit program. In the alternative, and again depending upon the needs and context of a given application, the emission credit may be received **33** from another party, which another party received the emission credit from such an administrative entity or regulatory body (for example, and referring momentarily to FIG. 2, the first party **11** or the sponsor or other representative of the end-user mobile platform **13** might receive an emissions credit directly from such an entity or body and this second party **24** might then receive the emissions credit from the first party/mobile platform sponsor/representative).

So configured, the emissions credit can ultimately inure to the benefit of a party that makes the initial allocation of resources sufficient to permit the sourcing of an additive material that results in an overall reduction of emissions of one or more substances of concern, notwithstanding that the emission reduction occurs in a potentially widely distributed fashion over a plurality of end-user mobile platforms.

If desired, this process **30** can further include identification **34** of a second party that creates emission of a second substance of interest. Depending upon the specific embodiment, this second substance of interest can be substantially identical to the first substance of interest or can be substantially dissimilar to the first substance of interest. At least a portion of the emission credit as generated and received earlier is then transferred **35** to this second party. The second party, in turn, can then use that emissions credit as an offset to apply against their own emissions of the second substance of interest (where, of course, such an application of the emissions credit constitutes an acceptable practice with respect to the mandatory or voluntary regulation of the second substance of interest). This optional aspect of the process then further contemplates that the second party may transfer **36** something of value in exchange for receipt of this emissions credit. For example, the second party could provide a substantially liquid monetary instrument (including but not limited to cash, and check, or the like), a commitment regarding either a present or a future business opportunity, a legal grant regarding an intellectual property right (including but not limited to an assignment or a license), or a commitment of assistance or other aid to facilitate access to purchasers of a given market (other possibilities, of course, exist).

In an embodiment of the present invention, the consumable product can include hydrocarbonaceous fuels such as but not limited to diesel fuel, jet fuel, alcohols, ethers, kerosene, low sulfur fuels, synthetic fuels, such as Fischer-Tropsch fuels, liquid petroleum gas, fuels derived from coal, genetically engineered biofuels and crops and extracts therefrom, natural gas, propane, butane, unleaded motor and aviation gasolines, and so-called reformulated gasolines which typically contain both hydrocarbons of the gasoline boiling range and fuel-soluble oxygenated blending agents, such as alcohols, ethers and other suitable oxygen-containing organic compounds. Other fuels that are useful in the methods and combustion units of the present invention are gasoline, bunker fuel, coal (dust or slurry), crude oil, refinery "bottoms" and by-products, crude oil extracts, hazardous wastes, yard trimmings and waste, wood chips and saw dust, agricultural waste, fodder, silage, plastics and other organic waste and/or by-products, and mixtures thereof, and emulsions, suspensions, and dispersions thereof in water, alcohol, or other carrier fluids. By "diesel fuel" herein is meant one or more fuels selected from the group consisting of diesel fuel, biodiesel, biodiesel-derived fuel, synthetic diesel and mixtures thereof.

In another embodiment of the present invention, the end user platform can be selected from the group consisting of internal and external combustion devices, machines, boilers, incinerators, leaf blowers, lawn mowers, chain saws, tractors, off-road vehicles, recreation vehicles, evaporative burners, plasma burner systems, plasma arc, stationary or mobile burners and the like which can combust or in which can be combusted a hydrocarbonaceous fuel. The combustion units effective in the utilization of the present invention include any and all burners or combustion devices, including for example and without limitation herein, mobile or stationary burners, turbines, buses, waste incinerators, diesel fuel burners, gasoline fuel burners, power plant generators, and/or power plant furnaces. The devices can also be 2-cycle engines and/or 4-cycle engines.

To further exemplify the breadth of these teachings, the following supplemental examples are provided.

### Example 1. Mobile source to mobile source

A first party operates a fleet of construction vehicles and/or buses that consume diesel fuel and that release a corresponding regulated substance. Nearly half the fleet has relatively older and less efficient engines such that the total quantity of the regulated substance as produced by this fleet exceeds a given limit. A second party operates a rental car fleet within the same general geographic area as the first party. These rental vehicles consume gasoline and produce another regulated substance. The second party combines an additive with the gasoline, however, that significantly reduces the amount of regulated substance that these vehicles produce. In this example, this reduction is sufficient to claim or otherwise earn an emission credit. Part or all of this emission credit is then transferred to the first party for use as an offset to that party's circumstances.

### Example 2. Mobile source to fixed/stationary source

A utility, such as a power generation facility, consumes coal to facilitate the generation of electricity. Combustion of the coal produces at least one regulated substance in quantities that exceed a given limit for such a substance. A maker of a gasoline additive that, when added to gasoline as consumed by automobiles and/or trucks, significantly reduces emission of this same regulated substance receives emission credits that derive from this resultant performance. The gasoline additive maker transfers these emission credits to the benefit of the utility to offset that party's non-compliant emissions.

### Example 3. Fixed/stationary source to mobile source

A package delivery service operates a fleet of jets, which jets consume aviation fuel. Such combustion produces excess levels of a regulated substance. An oil-burning power generation utility combines its fuel with an additive that results in a significant reduction in another regulated substance, thereby earning corresponding emission credits. The power generation facility sells a portion of these credits to the package delivery service to allow the latter to apply such credits on its own behalf to thereby attain compliance with the regulatory standards that govern its production of the regulated substance.

### Example 4. Fixed/stationary source to fixed/stationary source

An oil-burning power generation utility combines its fuel with an additive to achieve a corresponding reduction in NOₓ, for which the utility receives an emission credit. An incinerator facility, through its activities, also produces NOₓ, albeit in unacceptably high levels. The emission credits are traded to the incinerator facility and the latter uses the credits to offset its NOₓ emissions.

So configured, a wide variety of extended activities and transactions can be leveraged via the provision of such emissions credits to encourage and reward activities and investments that ultimately serve to benefit the overall environment. These embodiments are compatible for use with both legally mandatory and voluntary emissions credit programs and are particularly suitable for use in multi-party paradigms (though similar benefits are attained with simpler transactions as well).

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept. For example, in the illustrative examples provided above, the consumable product comprised a fuel. These teachings are likewise applicable to other materials, processes, and contexts as well. As one illustration, it is well understood in the art that methane gases as well as ground water contaminants as released by livestock such as cattle, horses, sheep, fowl, and the like as a normal part of the animal digestive process contributes in significant measure to generally undesirable levels of ozone in the Earth's atmosphere or soil and water contamination. In a similar way a wide variety of other biological effluents and waste products can be viewed as comprising an objectionable or potentially objectionable resultant substance that would be less problematic if reduced in quantity or otherwise made somehow less adverse. The present embodiments are directly applicable to facilitate the provision of a corresponding emissions credit to a party that succeeds in developing and distributing a material, process, or practice that would result in a reduction of such naturally occurring emissions. It should therefore be well understood that "consumable product" and "emission" should properly be viewed broadly and inclusively.

### Preferred Embodiments:

The present invention relates to a method comprising:
- identifying a first party that provides a consumable product that is distributed for consumption in an end-user mobile platform, wherein the consumption of the consumable product includes a corresponding resultant emission of at least a first substance of interest;
- providing to the first party a material that, when combined with the consumable product, will reduce the corresponding resultant emission of the first substance of interest; and
- receiving an emission credit as a result of a reduction of the corresponding resultant emission due to the material.

In a preferred embodiment of this method, the consumable product comprises diesel fuel.

In a preferred embodiment of this method, the first substance of interest comprises a nitrogen oxide.

In a preferred embodiment of this method, the consumable product comprises gasoline.

In a preferred embodiment of this method, the first substance of interest comprises a sulfur oxide.

In a preferred embodiment of this method, the material comprises a cetane improver.

In a preferred embodiment of this method, the material comprises a diesel ignition improver.

In a preferred embodiment of this method, the first substance of interest comprises a particulate substance.

In a preferred embodiment of this method, it further comprises:
- identifying a second party that creates an emission of a second substance of interest;
- transferring to the second party at least part of the emission credit, which emission credit serves as an offset to the second party's emission of the second substance of interest.

In a preferred embodiment the afore-mentioned second substance of interest is substantially identical to the first substance of interest or the second substance of interest is substantially dissimilar to the first substance of interest.

In a preferred embodiment, transferring to the second party at least part of the emission credit includes transferring to the second party at least part of the emission credit in exchange for something of value.

In a preferred embodiment, transferring to the second party at least part of the emission credit in exchange for something of value comprises transferring to the second party at least part of the emission credit in exchange for at least one of:
- a substantially liquid monetary instrument;
- commitment of at least one of present and future business opportunity;
- a legal grant regarding an intellectual property right;
- access to purchasers of a given market.

In a preferred embodiment the first substance of interest comprises a legally regulated substance of interest.

In a preferred embodiment the emission credit comprises a regulated emission credit.

In a preferred embodiment the regulated emission credit comprises an emission credit that is regulated by at least one of a city, county, state, provincial, national, regional, multi-national, and international sovereign entity.

In a preferred embodiment the first substance of interest comprises a voluntarily regulated substance of interest.

In a preferred embodiment the emission credit comprises a voluntarily-administered emission credit.

In a preferred embodiment receiving an emission credit includes receiving the emission credit substantially directly from a regulatory agency or directly from an administrative entity.

In a preferred embodiment, receiving the emission credit substantially directly from an administrative entity includes receiving the emission credit substantially directly from an administrative entity that administers voluntary compliance with an emissions reduction credit program.

In a preferred embodiment, the consumable product is selected from the group consisting of diesel fuel, jet fuel, alcohols, ethers, kerosene, low sulfur fuels, synthetic fuels, Fischer-Tropsch fuels, liquid petroleum gas, fuels derived from coal, genetically engineered biofuels and crops and extracts therefrom, natural gas, propane, butane, unleaded motor and aviation gasolines, reformulated gasolines, alcohols, ethers, gasoline, bunker fuel, coal (dust or slurry), crude oil, refinery "bottoms" and by-products, crude oil extracts, hazardous wastes, yard trimmings and waste, wood chips and saw dust, agricultural waste, fodder, silage, plastics, organic waste and/or by-products, and mixtures thereof, and emulsions, suspensions, and dispersions thereof in water, alcohol, or other carrier fluids.

In a preferred embodiment, the first substance of interest comprises at least one of a particulate, a hydrocarbon, a volatile organic compound, a nitrogen oxide, a sulfur oxide, carbon monoxide, and carbon dioxide.

In a preferred embodiment, receiving the emission credit from the first party includes receiving the emission credit from the first party who receives at least part of the emission credit substantially directly from an administrative body.

In a preferred embodiment, receiving the emission credit includes receiving the emission credit from a sponsor of the end-user mobile platform.

In a preferred embodiment, receiving the emission credit from the first party includes receiving the emission credit from the first party who receives at least part of the emission credit substantially directly from a regulatory body.

In a preferred embodiment the end user mobile platform is selected from the group consisting of internal and external combustion devices, machines, boilers, incinerators, leaf blowers, lawn mowers, chain saws, tractors, off-road vehicles, buses, evaporative burners, plasma burner systems, plasma arc, stationary burners, mobile burners, waste incinerators, turbines, diesel fuel burners, gasoline fuel burners, power plant generators, and power plant furnaces.

In a preferred embodiment, the end user mobile platform is a passenger car, truck, or recreation vehicle.

In a preferred embodiment, the material comprises 2-ethyl hexyl nitrate.

In a preferred embodiment, the material comprises a petroleum additive.

In a preferred embodiment, the material comprises an organic manganese compound fuel additive which preferably comprises methylcyclopentadienyl manganese tricarbonyl.

In a preferred embodiment of the method, providing to the first party a material that, when combined with the consumable product, will reduce the corresponding resultant emission of the first substance of interest includes the first party providing the substance to itself.

In a preferred embodiment of the method, wherein providing to the first party a substance that, when combined with the consumable product, will reduce the corresponding resultant emission of the first substance of interest includes another party providing the substance to the first party.

In a preferred embodiment, receiving an emission credit includes the another party receiving the emission credit.

In a preferred embodiment, providing to the first party a material that, when combined with the consumable product, will reduce the corresponding resultant emission of the first substance of interest includes providing to the first party a material that, when combined with the consumable product, will reduce the corresponding resultant emission of the first substance of interest by at least a predetermined value.

The present invention further relates to a method comprising
- identifying a first party that provides a consumable product that is distributed for consumption, wherein the consumption of the consumable product includes a corresponding resultant emission of at least a first substance of interest;
- providing to the first party a material that, when combined with the consumable product, will reduce the corresponding resultant emission of the first substance of interest; and
- receiving an emission credit as a result of a reduction of the corresponding resultant emission due to the material.

In a preferred embodiment of this method, the first substance of interest comprises at least one of a particulate, a hydrocarbon, a volatile organic compound, a nitrogen oxide, a sulfur oxide, carbon monoxide, and carbon dioxide.

In a preferred embodiment, this method further comprises transferring at least a portion of the emission credit to another party.

In a preferred embodiment, the another party has responsibility for emissions that correspond to the operation of a mobile source of emissions and wherein the emission credit as transferred to the another party comprises at least a potential offset against regulatory obligations regarding the emissions that correspond to the operation of the mobile source of emissions.

In a preferred embodiment, the mobile source of emissions comprises at least one of a plurality of automobiles, off-road vehicles, trucks, locomotives, boats, and aircraft.

In a preferred embodiment the another party has responsibility for emissions that correspond to the operation of a stationary source of emissions and wherein the emission credit as transferred to the another party comprises at least a potential offset against regulatory obligations regarding the emissions that correspond to the operation of the stationary source of emissions.

In a preferred embodiment, the stationary source of emissions comprises at least one of an internal or external combustion devices, machines, boilers, incinerators, turbines, evaporative burners, plasma burner systems, plasma arc, stationary burners in which can combust or in which can be combusted a hydrocarbonaceous fuel.

The present invention further relates to a method comprising:
- identifying a first party that provides a consumable product that is distributed for consumption by stationary end-user platform, wherein the consumption of the consumable product includes a corresponding resultant emission of at least a first substance of interest;
- providing to the first party a material that, when combined with the consumable product, will reduce the corresponding resultant emission of the first substance of interest; and
- receiving an emission credit as a result of a reduction of the corresponding resultant emission due to the material.

In a preferred embodiment of this method, the first substance of interest comprises at least one of a particulate, a hydrocarbon, a volatile organic compound, a nitrogen oxide, a sulfur oxide, carbon monoxide, and carbon dioxide.

In a preferred embodiment, this method further comprises transferring at least a portion of the emission credit to another party.

In a preferred embodiment the another party has responsibility for emissions that correspond to the operation of a mobile source of emissions and wherein the emission credit as transferred to the another party comprises at least a potential offset against regulatory obligations regarding the emissions that correspond to the operation of the mobile source of emissions.

In a preferred embodiment, the mobile source of emissions comprises at least one of a plurality of automobiles, off-road vehicles, trucks, locomotives, boats, and aircraft.

In a preferred embodiment, the another party has responsibility for emissions that correspond to the operation of a stationary source of emissions and wherein the emission credit as transferred to the another party comprises at least a potential offset against regulatory obligations regarding the emissions that correspond to the operation of the stationary source of emissions.

In a preferred embodiment the stationary source of emissions comprises at least one of an internal or external combustion devices, machines, boilers, incinerators, evaporative burners, plasma burner systems, plasma arc, stationary burners in which can combust or in which can be combusted a hydrocarbonaceous fuel.

## Claims

**1.** A method of reducing emission of a substance of interest selected from the group consisting of a particulate, a hydrocarbon, a volatile organic compound, a nitrogen oxide, a sulfur oxide, carbon monoxide, and carbon dioxide by adding an emission reducing material to a consumable product to yield an altered consumable product producing less of the substance of interest.

**2.** The method of claim 1 comprising:
- identifying a first party that provides the consumable product that is distributed for consumption, wherein the consumption of the consumable product includes a corresponding resultant emission of at least a first substance of interest;
- providing to the first party the emission reducing material that, when combined with the consumable product, will reduce the corresponding resultant emission of the first substance of interest; and
- receiving an emission credit as a result of a reduction of the corresponding resultant emission due to the material.

**3.** The method of claim 2, further comprising:
- identifying a second party that creates an emission of a second substance of interest;
- transferring to the second party at least part of the emission credit, which emission credit serves as an offset to the second party's emission of the second substance of interest.

**4.** The method of claim 3 wherein transferring to the second party at least part of the emission credit includes transferring to the second party at least part of the emission credit in exchange for something of value.

**5.** The method of any of claims 1 to 4, wherein the consumable product is selected from the group consisting of diesel fuel, jet fuel, alcohols, ethers, kerosene, low sulfur fuels, synthetic fuels, Fischer-Tropsch fuels, liquid petroleum gas, fuels derived from coal, genetically engineered biofuels and crops and extracts therefrom, natural gas, propane, butane, unleaded motor and aviation gasolines, reformulated gasolines, alcohols, ethers, gasoline, bunker fuel, coal (dust or slurry), crude oil, refinery "bottoms" and by-products, crude oil extracts, hazardous wastes, yard trimmings and waste, wood chips and saw dust, agricultural waste, fodder, silage, plastics, organic waste and/or by-products, and mixtures thereof, and emulsions, suspensions, and dispersions thereof in water, alcohol, or other carrier fluids.

**6.** The method of any of claims 2 to 5, wherein receiving the emission credit from the first party includes receiving the emission credit from the first party who receives at least part of the emission credit substantially directly from an administrative body.

**7.** The method of any of claims 2 to 6, wherein the consumption is in an end-user mobile platform.

**8.** The method of 7, wherein the end user mobile platform is selected from the group consisting of internal and external combustion devices, machines, boilers, incinerators, leaf blowers, lawn mowers, chain saws, tractors, off-road vehicles, buses, evaporative burners, plasma burner systems, plasma arc, stationary burners, mobile burners, waste incinerators, turbines, diesel fuel burners, gasoline fuel burners, power plant generators, and power plant furnaces.

**9.** The method of claim 8, wherein the end user mobile platform is a passenger car, truck, or recreation vehicle.

**10.** The method of any of claims 1 to 9, wherein the emission reducing material comprises 2-ethyl hexyl nitrate.

**11.** The method of any of claims 1 to 9, wherein the emission reducing material comprises an organic manganese compound fuel additive.

**11.** The method of claim 10 wherein the organic manganese compound fuel additive comprises methylcyclopentadienyl manganese tricarbonyl.

**12.** The method of any of claims 2 to 11, further comprising transferring at least a portion of the emission credit to another party.

**13.** The method of claim 12, wherein the another party has responsibility for emissions that correspond to the operation of a mobile source of emissions and wherein the emission credit as transferred to the another party comprises at least a potential offset against regulatory obligations regarding the emissions that correspond to the operation of the mobile source of emissions.

**14.** The method of claim 13 wherein the mobile source of emissions comprises at least one of a plurality of automobiles, off-road vehicles, trucks, locomotives, boats, and aircraft.

**15.** The method of claim 12 or 13 wherein the another party has responsibility for emissions that correspond to the operation of a stationary source of emissions and wherein the emission credit as transferred to the another party comprises at least a potential offset against regulatory obligations regarding the emissions that correspond to the operation of the stationary source of emissions.
